(19) Europäisches Patentamt
European Patent Office
Office européen des brevets

(11) **EP 1 816 850 A1**

(12) **EUROPEAN PATENT APPLICATION**

(43) Date of publication:
**08.08.2007 Bulletin 2007/32**

(51) Int Cl.:
*H04N 1/60* *(2006.01)*  *H04N 1/40* *(2006.01)*

(21) Application number: **06101283.7**

(22) Date of filing: **03.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Agfa Graphics N.V.**
**2640 Mortsel (BE)**

(72) Inventors:
 • **Vande Velde, Koen**
  **c/o Agfa Graphics NV**
  **2640   Mortsel (BE)**

 • **Mahy, Marc**
  **c/o Agfa Graphics NV**
  **2640  Mortsel (BE)**

(74) Representative: **Goedeweeck, Rudi et al**
  **Agfa Graphics N.V.**
  **IP Department 3622**
  **Septestraat 27**
  **2640 Mortsel (BE)**

(54) **Halftone proofing with adapted split curves**

(57)     A digital proofing method and system includes a first set of level split curves for the purpose of contone proofing and a second set of level split curves for the purpose of dot-for-dot proofing, wherein said level split curves control the amounts of combinations of ink volumes and ink densities to render a pixel on the proofing system.

Figure 5

EP 1 816 850 A1

**Description**

FIELD OF THE INVENTION

The present invention relates to an image processing method and system. More specifically, the method relates to an improved image processing method for a digital proofing device that is capable to render the halftone dots on the proof.

BACKGROUND OF THE INVENTION

A print master, usually a printing plate, for an offset press operates in binary mode, i.e. it comprises only areas that either attract or repel ink. This implies that the image that is used to create such a print master should also be binary in nature. Digital halftoning is used to render intermediate shades of color. A typical halftone uses an angled square pattern having 150 dots per inch (dpi), of which the size can be modulated to vary the shade of a color. In order to enable the modulation of shades of color and corresponding dot sizes in sufficiently small increments, the halftone pattern is represented and rendered on a plate by a plate setter at a relatively high spatial resolution such as 2400 pixels per inch (ppi).

In the case of color printing, a set of color separations is used, one for each colorant on the printing press. A set of color separations is usually halftoned using halftone screens having the same frequency but different angles.

A proof is expected to accurately predict how a document will look like when it is printed on a printing press.

This enables a print buyer at an early stage to verify if all the elements of said document are correct rendered before costs are initiated to make print masters or to start a press run.

Said verification of a proof involves both checking the content of the document and the image quality.

Proofing can be achieved by means of a digital proofing device. A representative digital proofing device is an inkjet device that operates at a relatively low spatial resolution (e.g. a 720 ppi) and is able to create more than 2 density levels per pixel. The latter is achieved for example by varying the droplet volume of a pixel in increments, by using multiple inks having substantially the same color to print on the same pixel, or by a combination of both.

Digital proofing devices use a frequency modulation halftoning technique to render a continuous range of colors and tones using the discrete set of droplet volumes and inks that are available on said proofing device. A color management module ensures that colors and tones are rendered on the substrate predictable and faithful to their specification.

The industry makes a distinction between two proofing modes.

A first proofing mode is called "contone proofing". In this case a digital proofing device produces images that faithfully represent content and color of a document that is to be printed. The color management is programmed to simulate the colors exactly as they will appear on the sheets printed on the printing press.

A second proofing mode is called "dot-for-dot" proofing. In this case additionally the halftone dot patterns are simulated on the proof as they will appear on the sheets printed on the printing press.

Dot-for-dot proofing enables to check for image quality problems related to the digital halftoning, such a subject or color moire. As a result dot-for-dot proofing as a higher predictive value than contone proofing. The simulation of a halftone screen as it appears on the press on a digital proofing device, however, is a challenging task, as it involves the microscopic rendering of halftone dots that are originally designed to be rendered on a binary device having a much higher spatial resolution than said proofing device. A key element in solving this problem is to make use in a creative way of the capability of a digital proofing device to render more than two densities per pixel.

A prior art system uses a predefined set of combinations of droplet volumes and ink densities per pixel to render a given tone or color. Said set is selected to optimize many printing and image quality characteristics such as minimizing drying time, minimizing halftone graininess, minimizing ink consumption, minimizing ink coalescence etc.

SUMMARY OF THE INVENTION

We have found that a set of combinations of ink densities and droplet volumes that produces optimal image quality for printing a digital contone proof is not necessarily optimal for printing a digital dot-for-dot proof.

Specifically, we have found that the printing of dot-for-dot proofs using print levels that produce small high density ink droplets generally results in unsatisfactory rendering of the contours of halftone dots in the original binary halftone screens.

According to the invention, a digital proofing method uses a first set of combinations ink densities and droplet volumes for digital contone proofing and a second set of combinations for dot on dot proofing, wherein both sets are different.

In a preferred embodiment, a set of level split curves are used that are different for each application.

The above mentioned method and a system have the specific features as set out in the independent claims.

Specific features for preferred embodiments of the invention are set out in the dependent claims.

Further advantages and embodiments of the present invention will become apparent from the following description and drawings.

BRIEF DESCRIPTION OF THE DRAWINGS

Figure 1 shows a printing system that can be used as a digital proofing system.

Figure 2 shows an addressable grid.

Figure 3 shows a printer controller.

Figure 4 shows a data processing system.

Figure 5 shows a method according to a preferred embodiment of the current invention.

Figure 6 shows an example of a set of level split curves for the purpose of contone proofing.

Figure 7 shows an example of a set of level split curves for the purpose of dot-for-dot proofing.

Figure 8 shows a vector error diffusion scheme according to a preferred embodiment of the current invention.

Figure 9 shows a halftone dot in a dot-for-dot proof rendered with small ink droplets having a high density as in a prior art system.

Figure 10 shows a halftone dot in a dot-for-dot proof rendered with large ink droplets having a low density according to an embodiment of the current invention.

DETAILED DESCRIPTION OF THE INVENTION

description of a system

The method according to the current invention is mainly directed towards the use in dot matrix printers and specifically drop-on-demand inkjet printers, but it is not limited thereto. The term printing and digital proofing as used in the invention refers to the process of creating a structured pattern of ink markings on a substrate. Non-impact printing methods are preferred but the present invention is not limited thereto.

digital proofing device

A digital proofing device is a dot matrix printer suitable for printing a digital image for the purpose of proofing.

ink

The ink can be a conventional pigmented or dyed ink or colorant, but it can also be wax, a water repellent substance, an adhesive or a plastic. Usually ink is not a pure compound, but a complex mixture comprising several components such as dyes, pigments, surfactants, binders, fillers, solvents, water and dispersants, each component serving a specific function. The ink could also be a material of which the viscosity or phase changes with temperature, such as wax. Specifically mentioned also are inks that polymerize, for example under influence of electromagnetic radiation such as UV light. This process is called curing.

Inks having the same hue shall mean that they share the same primary absorption peak as measured by a graphic arts densitometer, such as for example the X-Rite model 530.

In the case of neutral inks, inks having the same hue shall mean inks that have a CIE a* and CIE b* value of which:

$$(CIE\ a*)*(CIE\ a*)\ +\ (CIE\ b*)*(CIE\ b*)\ <\ 16$$

when said inks are separately printed on a substrate using the print levels that produce the maximum density on said substrate.

Inks having the same hue can have the same densities, but preferably have different densities. For example, a first cyan ink can have a density that is lower than the density of a second cyan ink.

substrate

The substrate could be paper, but it could also be textile, a synthetic foil or a metal plate. Examples of printing processes include inkjet printing (drop-on-demand and continuous), thermal wax or dye transfer printing and the use of inkjet to create printing masters for offset printing.

addressable grid of pixels

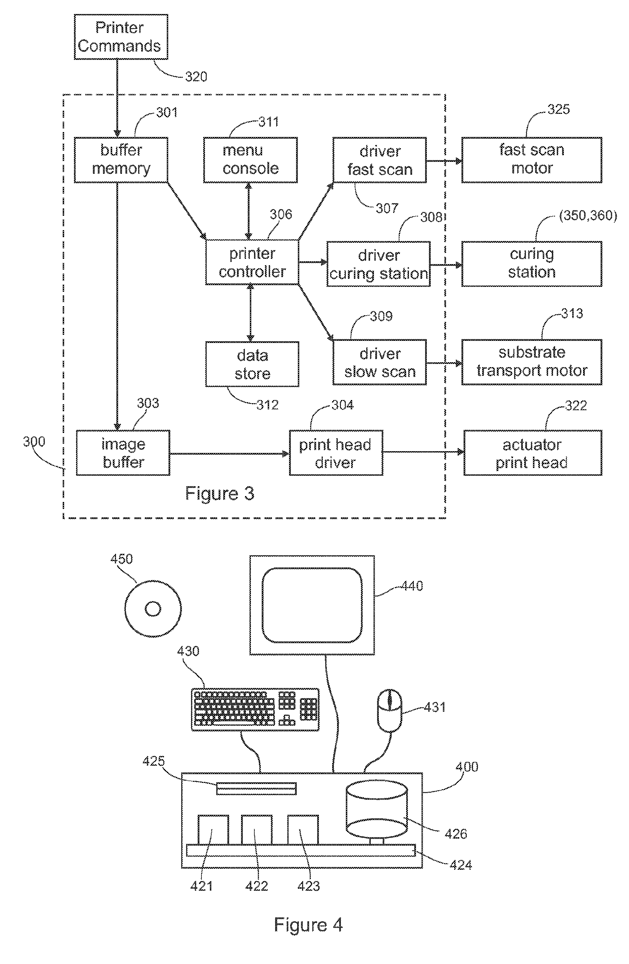

Referring to Figure 2, the rectangular raster grid that is defined by the positions where a droplet can be printed is called the addressable grid 251. An element of the addressable grid is a pixel 230. The pixels are arranged in rows addressed by a row index i 250 and columns addressed by a column index j 260. With one pixel is associated a color or a set of colorant magnitudes. The color can be monochrome or full color, for example described three color components, expressing equivalent magnitudes of a specific set of red, green blue primaries. The set of colorant magnitudes can for example be density values of light cyan, dark cyan, light magenta, dark magenta, yellow and light grey, medium grey and black colorants.

print head and shuttle transport

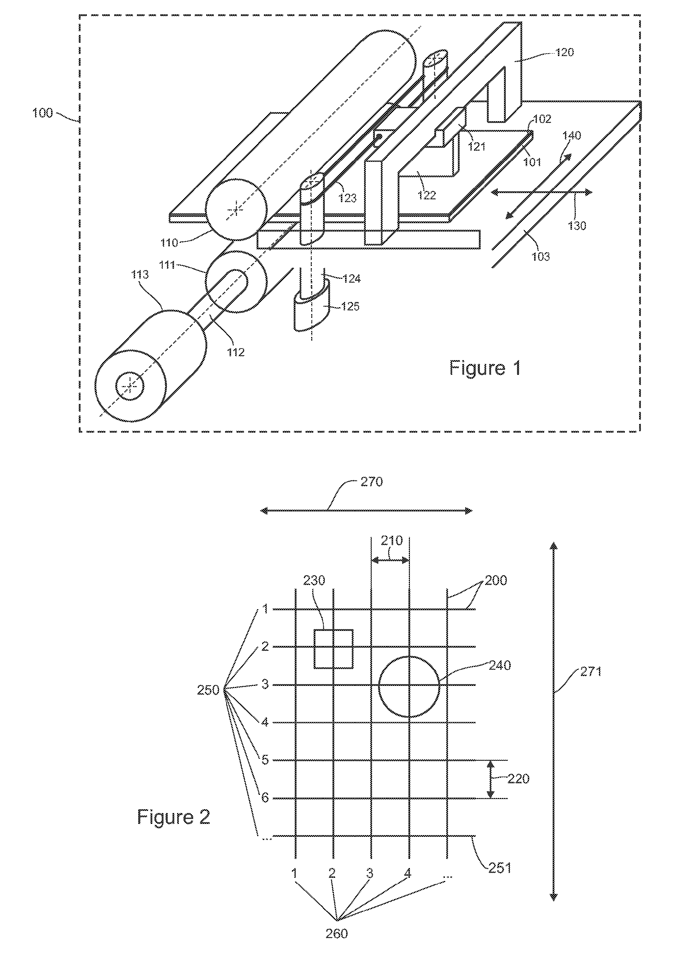

Referring to one specific embodiment shown in Figure 1, a transducer, an ink chamber and a nozzle - etched in a nozzle plate - together make up a print head 122. Such a print head 122 is mounted on a shuttle 121 that is capable to travel on a guide 120. The shuttle transport is achieved by means of a belt 123, a shaft 124 and a first motor 125.

substrate transport

In the same embodiment a substrate 101 having an ink receiving layer 102 rests on a substrate support 103 and is transported by a substrate transport mechanism comprising two rollers 110,111, a shaft 112 and a second motor 113.

printing

Printing an image of a document is generally achieved by moving at least one print head relative to a substrate by means of a shuttle and a substrate transport mechanism and selectively jetting ink droplets by the actuator on a substrate in response to the colorant magnitudes of the pixels of said image of said document.

According to a preferred embodiment, an inkjet printer is capable to print a pixel using ink droplets of which with the volume can have at least three discrete values (including a volume of zero).

According to the same embodiment, said inkjet printer is capable to print on the same pixel droplets of at least two inks having the same hue.

print level

A print level of a digital proofing device corresponds with one of the colorant magnitudes at a pixel level that can be printed by said device.

In one embodiment a set of print levels corresponds with distinct droplet volumes of a colorant that can be printed at a pixel level by a printing device.

In another embodiment a set of print levels corresponds with distinct inks having the same hue that can be printed at a pixel level by a printing device.

In a preferred embodiment, a set of print levels corresponds with the combinations of distinct droplet volumes and distinct inks having the same hue that can be printed at a pixel level by a printing device.

Distinct droplet volumes shall mean droplet volumes that are obtained from driving an actuator in a print head with a signal that corresponds with a different digital code in the print head driver. Distinct droplet volumes result in ink spots having different sizes. With the size of a spot is meant the area of said spot measures within its contour. The contour of a spot is defined by the boundary where the density of said spot rises above 5% of its maximum density relative to the density of the substrate on which said spot is printed.

Distinct inks shall mean inks that are deposited to a pixel in at least two steps, for example in two passes of a shuttle 121 or by two different print heads 122.

In general - but not necessarily - pixels printed with different print levels result in different amounts of light absorption when printed.

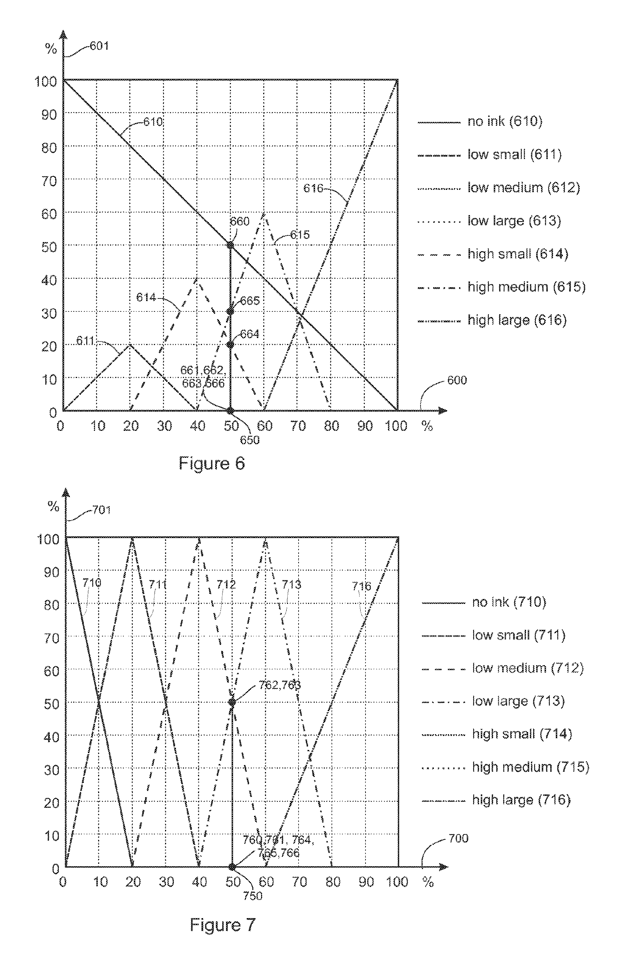

Referring to Figure 6, a set of print levels includes combinations of three droplet sizes (a small droplet (611, 614), a medium droplet (612, 615) or a large droplet (613, 616)) and two inks having the same hue but different densities (a low density ink (611, 612, 613) and high density ink (614, 615, 616). In combination with the option to print no droplet at all (610), this results in a total of 7 print levels. According to the current invention, other sets of print levels are also possible, such as for example a set including only droplets having two distinct volumes larger than zero, or a set including only multiple inks having the same hue.

printer controller

Referring to Figure 3, printer commands 320 are received by a buffer memory 301. These printer commands contain printer controller information which is sent to a printer controller 306 and image data which is sent to an image buffer 303. The printer controller controls a fast scan driver 307 that drives the fast scan motor 325, 125 for moving the shuttle in a fast scan direction. The printer controller also controls a slow scan driver 309 that drives the slow scan motor 313, 113. The information in the image buffer 303 is used to drive the actuator(s) 322 in a print head 122 by means of a print head driver 304.

computer system

According to a preferred embodiment and referring to Figure 4, printer commands are generated from a data processing system 400 such as a computer. A computer comprises a network connection means 421, a central processing unit 422 and memory means 423 which are all connected through a computer bus 424. The computer typically also has a computer human interface 430, 431 for inputting data and a computer human interface 440 for outputting data. According to one embodiment, the computer program code is stored on a computer readable medium such as a mass storage device 926 or a portable data carrier 450 which is read by means of a portable data carrier reading means 425.

description of the method.

We describe a preferred embodiment of a method to carry out the current invention.

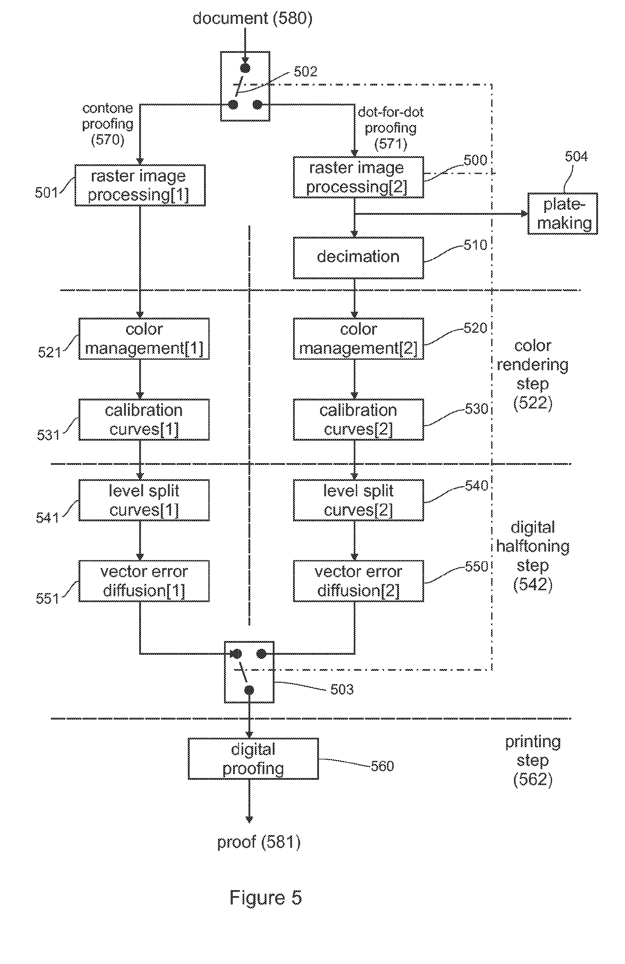

Referring to Figure 5, the input of a method is a digital document 580 and the result a digital proof 581. Two proofing modes are provided: a contone proofing mode 570 comprising the steps 501, 521, 531, 541, 551 and 560, and a dot-for-dot proofing mode comprising the steps 500, 510, 520, 530, 540, 550 and 560. The proofing mode is selected by a user, for example by means of a graphical user interface of a computer system 400. The selection of the proofing modes drives a software switch 502, 503 that controls the processing path 570, 571.

contone proofing method

We start of by explaining the contone proofing method 570.

The input of the method is an original document 580 that is to be printed on a press and to be proofed 560 first to yield a proof 581. Usually this document 580 is represented in a device independent format such as for example PDF®, MS-Word®, or PostScript®.

According to a preferred embodiment, the method comprises a raster image processing step 501. This step involves the transformation of an input document into a raster image having a spatial and tonal resolution and a colorant space.

According to a preferred embodiment, the calculations for the raster image processing step are carried out on a computer system using a computer program such as for example "Adobe PostScript Printer Driver" commercialized by the company Adobe Systems Incorporated, located in San Jose CA.

In the case of contone proofing 570, the spatial resolution parameter for the raster image processing 501 is preferably set to the spatial resolution of the digital proofing device 560, the colorant space is preferably set to the colorant space of the printing press, and the tonal resolution of the colorant values is preferably near continuous, for example 8 bits per colorant of a pixel.

The result of the raster image processing step is a set of separations having colorant values represented in the colorant space of the printing press and rendered on near continuous scale.

According to the same preferred embodiment, a next step comprises a color management step 521 to convert said separations into separations comprising colorant values for the digital proofing device 560.

This step is required because the colorants that a digital proofing device uses may have different hues and/or densities than the hues and densities of the colorants of the press for which the original separations were calculated. The color correction step involves replacing pixel by pixel the amounts of ink in the original separations by a mixture of amounts of colorants that, when rendered on the proofing device, matches the colors of these pixels as they would appear on the printing press.

The color management is preferably efficiently implemented by means of look-up tables that comprise a set of corrected colorant values for a sample of the printing press colorant space in combination with interpolation techniques, for example linear interpolation.

A next step involves applying a set of calibration curves 531 on the colorant values of each pixel of each color corrected separation.

The purpose of the calibration curves is to normalize the gradation of each individual color corrected separation. This may be necessary as the gradation of a colorant of a proofing device may vary over time or may be different between two different proofing devices.

A next step involves a level split step. The purpose of the level split is to determine for a colorant value with which print levels it is to be printed. Referring to Figure 6, this is preferably achieved by means of a set of level split curves 610-616. The print level curves split an input level value 650 represented on an abscissa scale 600 into a set of magnitudes 660-666 of print levels 610-616 represented on an ordinate scale 601, whereby each magnitude 660-666 indicates what proportion of pixels is to be printed with the corresponding print level to render said input level 650.

For example, referring Figure 6, an input level 650 of 50% is to be rendered with 50% of a first print level 610, 20% of a second print level 614, 30% of a third print level 615 and 0% of print levels 611, 612, 613 and 616.

Since in Figure 6 the curves represent proportions of possible print levels, including of a print level printing with no ink at all, it is required that at any input level the sum of the percentages corresponding to all the print levels should add up to 100%. Also, negative proportions of a print level are not allowed, since they do not correspond with a physical interpretation of printing with said print level.

In the case of the level split curves shown in Figure 6, an input level 650 is rendered with a mixture of a non-zero proportion of only three print levels 610, 614 and 615. In general however, level split curves can be programmed to render an input level with a non-zero proportion of any number of available print levels larger than or equal to one.

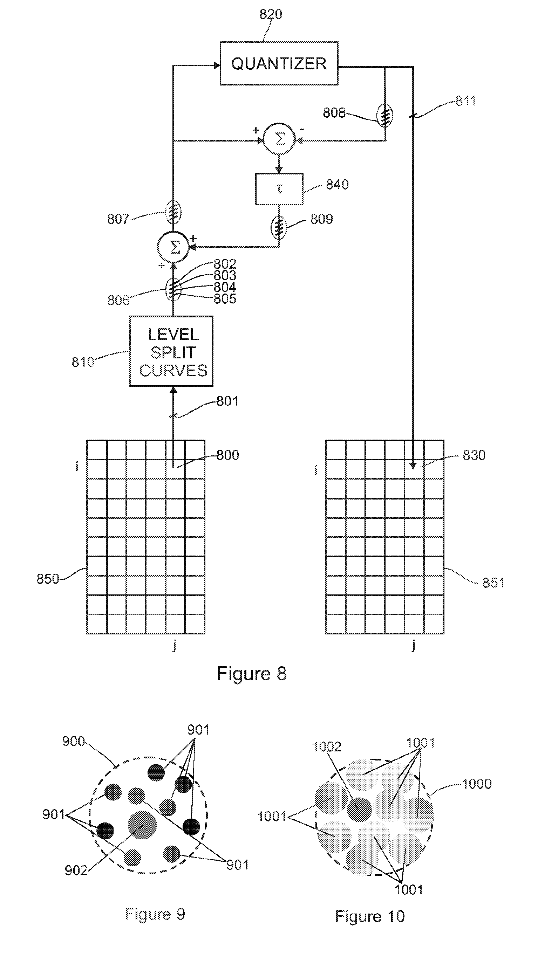

Referring to Figure 8, the result of a level split step on a colorant value 801 obtained from a pixel 800 in a separation 850 is a vector 806, of which the number of dimensions corresponds with the number of print levels 610-616, and of which the components 802-805 correspond with magnitudes 660-666 of said print levels. Said magnitudes are preferably represented on a near continuous tone scale, for example, a tone scale represented with 8 bits.

A next step according to the current invention involves error diffusion. According to a preferred embodiment, said error diffusion involves vector error diffusion.

Referring again to Figure 8, an input level vector 806 having vector components 802-805 that are determined in a previous level split step serves as an input to a vector error diffusion scheme that processes said input level vector to obtain for every pixel a quantized level vector 808.

A first step in the vector error diffusion processing step comprises modifying the input level vector 806 into a modified level vector 807, by adding to it at least one quantization error vector 809 or a portion thereof.

A quantization error vector 809 is stored in a buffer 840 and results from quantizing at least one modified level vector in one or more previous processing steps.

A second step comprises obtaining a quantized level vector 808 by quantizing said modified level vector by a quantizer 820. The result of the quantized level vector indicates which printable level is to be printed at the corresponding pixel location 830 having row index i and a column index j.

According to a preferred embodiment, said quantization step is based on minimizing the quantization error.

Since by definition, only one print level can be printed at any given pixel location, a method for quantization comprises searching for the component having the largest value, and setting the value of said component in a quantized level vector 808 to 100% of its maximum range, and setting the other components to 0%.

For example, referring to the example in Figure 8, a modified level vector 806 may comprise four components 802-805 having the values (20%,75%,10%,5%). Since the second component has the largest value and only one print level can be printed at any given pixel location, the quantization step would yield a quantized level vector (0%, 100%, 0%, 0%). This is to be interpreted that the input level 800 of a pixel having a row index i and column index j will be printed using a second print level, and the code for said corresponding print level 811 is stored in the pixel 830 of the separation 851.

The vector error diffusion is applied to all the pixels 800 of the separation 850 in a scanwise fashion, for example line-by-line or using a serpentine raster.

Following the error diffusion is a digital proofing step 560, in which a digital proofing device renders the document 580 in response to the print levels that were calculated in a previous error diffusion step 551.

dot-for-dot proofing method

In the following paragraphs a dot-for-dot proofing method 571 is explained. Many of the steps of this method are the same as in the contone proofing method 570, but there is an additional step 500 and the processing parameters of the other steps may be different.

In the case of dot-for dot proofing, the parameters for the raster image processing step (including spatial resolution, tonal resolution, halftoning, and color separation) are exactly the same as the parameters to calculate a bitmap for making a print master.

The result is a set of binary separations in the colorant space of a printing press that can be used to create the print masters in a plate making step 504.

For example, a set of four bitmaps comprising halftoned separations is obtained that can be used to create printing plates for the cyan, magenta yellow and black printing stations. Each bitmap is rendered at the tonal resolution (typically 1 bit/pixel) and spatial resolution (for example 2400 ppi) of a plate making device.

A next step 510 involves decimation to convert the high resolution bitmaps obtained from the previous step 500 into contone bitmaps represented at the spatial resolution of the digital proofing device. This has to be done in such a way that the features of the original halftone pattern in the binary bitmaps are maximally preserved.

The decimation step 510 preferably comprises a low pass filtering step followed by a resampling step. The low pass filtering avoids the introduction of aliasing artifacts that otherwise would be introduced as a result of the resampling the binary halftoned separation.

The result of the second step is a set of separations in the colorant space of the printing press, rendered on a near continuous tone resolution, for example 8 bits per pixel and that render the original (binary) halftone screens in an approximate way.

The following steps involve a color management step 520, a calibration step 530, a level split step 540, a vector error diffusion step 550 and a digital proofing step 503. The methods for these steps are similar to the ones described for contone proofing, although the parameters (color management look-up tables, calibration curves and level split curves) may differ.

Different parameters shall mean that for the same stimulus a step results in at least one response that is at least 5% different of the nominal range.

selection of print levels for digital contone and dot-for-dot proofing

We have found that a set of level split curves that produces optimal image quality results for printing a digital contone proof is not necessarily optimal for printing a digital dot-for-dot proof.

More specifically, we have found that the printing of contone proofs is better served by a method that favors print levels corresponding to small ink droplets in combination with high density inks, because this minimizes drying time, reduces ink consumptions and avoids the occurrence of ink coalescence.

In the case of dot-for-dot proofing, however, the use of print levels corresponding to small droplets of high density ink generally results in unsatisfactory rendering of the contours of halftone dots of the original binary halftone screens.

Figure 9 shows an example of one halftone dot of an original binary halftone screen rendered with small high density ink droplets 901 and a medium density ink droplet 902. As can be seen, the contour 900 of the original halftone dot is poorly rendered by the small ink spots 901.

Figure 10 shows an example of a halftone dot having the same contour as the halftone dot in Figure 9, but this time rendered with larger ink droplets 1001 having a low density and an ink droplet having a medium density 1002. The number and density of ink droplets 901, 902 and 1001, 1002 are selected so that the integral densities of both the halftone dots 901 and 1001 are identical. With integral density of a halftone dot here is meant the average density as measured over the area within the contour 900, 1001 of said halftone dot. With integral density in the case of contone proofing is meant the average density as measured over an arbitrary area having a constant colorant value prior to (vector error diffusion) halftoning 542. As can be seen in Figure 10, the contour 1001 of the halftone dot is much better defined. This explained by the fact that the halftone dot 1000 is rendered using less white space. The halftone dot within the contour 1000 in Figure 5 is much better filled up than the halftone dot within the contour 900 in Figure 9.

Referring to Figure 6, the printing of digital contone proofs is preferably achieved by using print levels 614-616 that use high density ink droplets, because the high density inks reduce the overall amount of ink consumption that is needed to render an image. This enables for faster curing of the inks on the substrate, less problems with coalescence and faster printing times.

The use of low density inks 611-613 for printing contone proofs is reserved for very low input levels (very light tones), where they can reduce the graininess that otherwise would be visible when said light tones would be rendered by high density ink droplets having a long average distance between them.

According to one aspect of the invention, the same magnitude of a colorant printed on a substrate by a digital proofing device uses a first mixture of print levels when said proofing device is operated in contone mode and a second mixture of print levels when said proofing device is operated in a dot-for-dot mode, whereby said first and second mixtures are different. With different is meant that at least one component of said first and second mixtures differ by at least 5% in the presence of its proportion.

According to another aspect of the invention, in contone mode a magnitude of colorant corresponding to a given integral density is rendered using a first mixture of print levels, whereas in dot-for-dot mode a given magnitude of colorant corresponding to the same integral density (as measured with the contours of the halftone dots) uses a second mixture of print levels, whereby said first and second mixtures are different. A first integral density is the same as a second integral density when both densities differ less than 0.05.

According to another aspect of the current invention, at least one magnitude 650, 750 of a colorant is rendered using ink spots having a first average size and density in contone mode, and a second average size and density in dot-for-dot mode, where said first average size is smaller than said second average size and said first average density is higher than said second average density. According to yet another aspect of the invention, the mixture of different print levels is controlled by level split curves.

The method is preferably implemented using a computer system such as depicted in Figure 4.

A digital proofing system according to the current invention preferably comprises a computer system 400 for applying the above method, an inkjet printing device 100, and a printer controller 300 for controlling said printing device.

Having described in detail preferred embodiments of the current invention, it will now be apparent to those skilled in the art that numerous modifications can be made therein without departing from the scope of the invention as defined in the appending claims.

For example, a variation of the use of level split curves and error diffusion is described in the patent EP-A- 1 592 226. Other variations are known to a person skilled in the art, such as the perturbation of error diffusion weights or modification of the quantization step in response to prior quantization steps or in response to an input level vector.

## Claims

1. A method for digital proofing (560) a document (580) using print levels (610-616, 710-716), said print levels corresponding to at least two distinct colorants having the same hue or at least two distinct spot sizes different from zero or combinations thereof, the method comprising the steps of:

   - selecting a proofing mode out of a set comprising a contone proofing mode (570) and a dot-for-dot proofing mode (571);
   - selecting (541) in said contone proofing mode for each colorant (600) magnitude a first mixture of print levels (660-666);
   - selecting (540) in said dot-for-dot proofing mode for each colorant magnitude (700) a second mixture of print levels (760-766) ;

   the method being **characterized in that** for at least one colorant magnitude (650,750) different from zero said first (660-666) and said second (760-766) mixtures of print levels are different.

2. A method for digital proofing (650) a document (580) using print levels (610-616, 710-716), said print levels corresponding to at least two distinct colorants having the same hue or at least two distinct spot sizes different from zero or combinations thereof, the method comprising the steps of:

   - selecting a proofing mode out of a set comprising a contone proofing mode (570) and a dot-for-dot proofing mode (571);
   - selecting in a contone proofing mode a first mixture of print levels resulting in an integral density when printed;
   - selecting in a dot-for-dot proofing mode a second mixture of print levels resulting in the same integral density when printed; the method being **characterized in that** the average spot size in said first mixture is at least 10% lower than the average spot size in said second mixture.

3. A method according to claim 1 or 2, wherein said mixtures of print levels are controlled by level split curves (610-616, 710-716).

4. A method according to anyone of the previous claims further including a printing step (560) for creating a proof.

5. A method according to anyone of the previous claims further including an error diffusion step.

6. A method according to anyone of the previous claims, further including a color management step (520, 521), wherein the color management parameters in a contone proofing mode (570) are different from the color management parameters in a dot-for-dot proofing mode (571).

7. A digital proofing system having a contone proofing mode and a dot-for-dot proofing mode, said system having print levels, said print levels corresponding to at least two distinct colorants having the same hue or at least two distinct spot sizes different from zero or combinations thereof, said system comprising:

   - a data processing system (300) for generating printer commands;
   - a printer controller (200) for controlling a fast scan motor (125), a substrate transport motor (113), and at least one actuator of at least one print head (122);
   - a print head assembly (700) comprising at least one print head (122) for printing ink, said print head assembly (700) being mounted on a shuttle (121) that moves along a fast scan orientation (770, 780) driven by a fast scan motor (125);
   - a substrate transport mechanism (110, 111, 112) to move a substrate (101) along a slow scan orientation (790, 791) driven by a slow scan motor (113);
   - a substrate (101) having an ink receiving layer (102); said system **characterized in that**:
   - said system prints at least one colorant magnitude different from zero in a contone proofing mode using a first mixture of print levels;
   - said system prints said same colorant magnitude in a dot-for-dot proofing mode using a second mixture of print levels that is different from said first mixture of print levels.

8. A system according to the previous claim, wherein said print head is an inkjet print head.

9. A data processing system comprising means for carrying out the steps of the method according to any one of the claims 1 to 4.

10. A computer program comprising computer program code means adapted to perform the method according to any one of the claims 1 to 4, when said program is executed on a computer.

11. A computer readable medium comprising program code adapted to carry out the method according to any one of the claims 1 to 4, when executed on a computer.

Figure 1

Figure 2

Printer
Commands

320

301

buffer
memory

311

menu
console

driver
fast scan

325

fast scan
motor

306

307

printer
controller

308

driver
curing station

(350,360)

curing
station

309

313

data
store

driver
slow scan

substrate
transport motor

300

303

312

image
buffer

304

print head
driver

322

actuator
print head

Figure 3

450

440

430

431

425

400

426

424

421    422    423

Figure 4

document (580)

502

contone
proofing
(570)

dot-for-dot
proofing
(571)

500

504

501 — raster image
processing[1]

raster image
processing[2]

plate-
making

decimation — 510

color
management[1]

color
management[2] — 520

color
rendering
step
(522)

521 —

calibration
curves[1]

calibration
curves[2] — 530

531 —

level split
curves[1]

level split
curves[2] — 540

541 —

digital
halftoning
step
(542)

vector error
diffusion[1]

vector error
diffusion[2] — 550

551 —

503

digital
proofing — 560

printing
step
(562)

proof (581)

Figure 5

12

Figure 6

Figure 7

Figure 8

Figure 9

Figure 10

**European Patent Office**

**EUROPEAN SEARCH REPORT**

Application Number

EP 06 10 1283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2005/109849 A (KODAK POLYCHROME GRAPHICS, LLC) 17 November 2005 (2005-11-17) * abstract; figures 1,4,5 * * paragraph [0002] - paragraph [0005] * * paragraph [0007] - paragraph [0023] * * paragraph [0018] - paragraph [0024] * * paragraph [0042] - paragraph [0044] * ----- | 1,2,7 | INV. H04N1/60 H04N1/40 |
| Y | EP 1 207 684 A (IRIS GRAPHICS, INC) 22 May 2002 (2002-05-22) * abstract; figures 1,3,5-7 * * paragraph [0005] - paragraph [0007] * * paragraph [0012] * * paragraph [0058] - paragraph [0062] * ----- | 1,2,7 | |
| A | WO 00/74372 A (IMATION CORPORATION) 7 December 2000 (2000-12-07) * abstract * ----- | 1 | |
| A | US 2005/280870 A1 (MAHY MARC ET AL) 22 December 2005 (2005-12-22) * abstract; figures 1,3 * * paragraph [0045] - paragraph [0046] * * paragraph [0077] - paragraph [0080] * ----- | 1 | TECHNICAL FIELDS SEARCHED (IPC) H04N |
| A | US 2003/058458 A1 (CARDOSO MICHAEL ANTHONY ET AL) 27 March 2003 (2003-03-27) * abstract; figures 1-10 * * paragraph [0040] - paragraph [0044] * ----- | 1 | |
| A | EP 1 517 537 A (KONICA MINOLTA MEDICAL & GRAPHIC INC) 23 March 2005 (2005-03-23) * abstract; figures 1,2,15 * ----- | 1 | |
| A | US 2003/076515 A1 (SCHUPPAN HOLGER) 24 April 2003 (2003-04-24) ----- -/-- | | |

The present search report has been drawn up for all claims

| Place of search | Date of completion of the search | Examiner |
|---|---|---|
| Berlin | 11 May 2006 | Kassow, H |

**European Patent Office**

**EUROPEAN SEARCH REPORT**

Application Number

EP 06 10 1283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 083 739 A (AGFA-GEVAERT; AGFA-GEVAERT NAAMLOZE VENNOOTSCHAP) 14 March 2001 (2001-03-14) ----- | | |

TECHNICAL FIELDS SEARCHED (IPC)

The present search report has been drawn up for all claims

| Place of search | Date of completion of the search | Examiner |
|---|---|---|
| Berlin | 11 May 2006 | Kassow, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 10 1283

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2006

| Patent document cited in search report | | Publication date | Patent family member(s) | | Publication date |
|---|---|---|---|---|---|
| WO 2005109849 | A | 17-11-2005 | NONE | | |
| EP 1207684 | A | 22-05-2002 | NONE | | |
| WO 0074372 | A | 07-12-2000 | EP JP | 1181812 A1<br>2003501897 T | 27-02-2002<br>14-01-2003 |
| US 2005280870 | A1 | 22-12-2005 | NONE | | |
| US 2003058458 | A1 | 27-03-2003 | NONE | | |
| EP 1517537 | A | 23-03-2005 | JP US | 2005091787 A<br>2005063014 A1 | 07-04-2005<br>24-03-2005 |
| US 2003076515 | A1 | 24-04-2003 | AU WO EP JP | 2344502 A<br>0230103 A1<br>1323294 A1<br>2004511184 T | 15-04-2002<br>11-04-2002<br>02-07-2003<br>08-04-2004 |
| EP 1083739 | A | 14-03-2001 | EP EP EP | 1341371 A2<br>1351483 A2<br>1343309 A2 | 03-09-2003<br>08-10-2003<br>10-09-2003 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1592226 A